# EUROPÄISCHE PATENTSCHRIFT

(11) **EP 2 134 514 B1**
(45) Veröffentlichungstag und Bekanntmachung des Hinweises auf die Patenterteilung: **21.09.2011**
(21) Anmeldenummer: 08714276.6
(22) Anmeldetag: 05.03.2008
(51) Int. Cl.: B25J 5/02, B25J 9/10

(54) **MANIPULATOR FÜR DIE BELADUNG WENIGSTENS EINER MASCHINE, INSBESONDERE WERKZEUGMASCHINE, UND BELADEVORRICHTUNG FÜR EINE DERARTIGE MASCHINE**
MANIPULATOR FOR CHARGING AT LEAST ONE MACHINE, IN PARTICULAR A TOOL MACHINE, AND CHARGING DEVICE FOR SAID TYPE OF MACHINE
MANIPULATEUR SERVANT À CHARGER AU MOINS UNE MACHINE, EN PARTICULIER UNE MACHINE-OUTIL, ET DISPOSITIF DE CHARGEMENT POUR UNE MACHINE DE CE TYPE

(30) Priorität: 09.03.2007 AT 1472007 U
(43) Veröffentlichungstag der Anmeldung: 23.12.2009
(73) Patentinhaber: Pal-tec Automation Gmbh, 8074 Grambach (AT)
(72) Erfinder: REISINGER, Erwin, 8055 Graz-Seiersberg (AT)
(74) Vertreter: Mann, Volker
(86) Internationale Anmeldenummer: PCT/AT2008/000079
(87) Internationale Veröffentlichungsnummer: WO 2008/109902

(56) Entgegenhaltungen:
- EP-A- 0 063 161
- JP-A- 5 254 665
- US-A- 4 645 408

## Beschreibung

Die vorliegende Erfindung bezieht sich auf einen Manipulator nach dem Oberbegriff des Anspruchs 1. Die Erfindung bezieht sich darüber hinaus auf eine Beladevorrichtung für wenigstens eine Maschine, insbesondere Werkzeugmaschine, umfassend eine Beladestation für jeweils eine Palette mit einer Mehrzahl von zu bearbeitenden Werkstücken, wenigstens eine Ent- bzw. Beladestation für die Maschine, insbesondere Werkzeugmaschine, und eine Mehrzahl von Palettenlager- bzw. -speicherplätzen zur Anordnung bzw. Aufnahme von jeweils einer Palette.

Im Zusammenhang mit der Beladung einer Maschine, insbesondere Werkzeugmaschine, ist es bekannt, zu bearbeitende Gegenstände bzw. Werkstücke auf einer Palette für die Bearbeitung in der Maschine vorzubereiten und eine Palette mit derartigen zu bearbeitenden Werkstücken an einer Beladestation für die Maschine zur Verfügung zu stellen, wobei über in der Maschine, insbesondere Werkzeugmaschine, enthaltene Aufnahme- bzw. Greifvorrichtungen jeweils eine Entnahme eines zu bearbeitenden Werkstücks von der Palette erfolgt. Nach vollständiger Bearbeitung sämtlicher auf einer Palette vorbereiteter bzw. angeordneter, zu bearbeitender Werkstücke wird die Palette mit den nunmehr fertig bearbeiteten Werkstücken wiederum entfernt, worauf eine neue Palette mit zu bearbeitenden Werkstücken der Maschine, insbesondere Werkzeugmaschine, zur Verfügung gestellt wird. Für eine derartige Handhabung von Paletten werden insbesondere automatisierte Manipulatoren verwendet, welche im wesentlichen automatisch gesteuert einen Transport von mit zu bearbeitenden Werkstücken beladenen Paletten von und zu der Maschine, insbesondere Werkzeugmaschine, und zwischen gegebenenfalls vorzusehenden Lager- bzw. Speicherplätzen und/oder Beladestationen von Paletten mit zu bearbeitenden Werkstücken bzw. die Entnahme von zu bearbeitenden Werkstücken transportieren.

Im Zusammenhang mit derartigen Manipulatoren sind einerseits Ausführungsformen bekannt, bei welchen eine Bewegung einer Gabel zur Aufnahme bzw. Abstützung jeweils einer Palette in einer im wesentlichen vertikalen Richtung im Sinn eines Anhebens und Absenkens einer Palette als auch einer hin- und hergehenden Bewegung in Richtung zu und weg von einem Palettenlagerplatz in einer im wesentlichen horizontalen Richtung erzielbar ist. Darüber hinaus ist zur Bedienung von mehreren Palettenlagerplätzen, welche im wesentlichen halbkreisförmig angeordnet sind, eine Rotation um eine im wesentlichen vertikale Achse eines die Gabel tragenden bzw. abstützenden Supports vorgesehen. Die im wesentlichen orthogonal aufeinander erfolgenden Bewegungen der Gabel des Manipulators in einer im wesentlichen vertikalen bzw. senkrechten Ebene erfolgen bei bekannten Ausführungsformen durch Bereitstellen einer Schlittenführung für die Gabel für die hin- und hergehende Bewegung in einer im wesentlichen horizontalen Richtung. Darüber hinaus ist im Bereich des Schlittens üblicherweise eine Hubvorrichtung vorgesehen, welche beispielsweise von einem im wesentlichen vertikal angeordneten Zylinderkolbenaggregat für ein Anheben und Absenken der Gabel und somit der Palette entsprechend gegebenenfalls unterschiedlichen Höhen von Palettenlagerplätzen als auch für ein zuverlässiges Anheben und Absenken von Paletten von Palettenlagerplätzen zu ermöglichen. Anstelle einer derartigen Hubvorrichtung, mit welcher üblicherweise große Hubhöhen bewältigbar sind, kann auch insbesondere in die Schlittenführung integriert eine Ausbildung mit zueinander geneigten Schrägflächen vorgesehen sein, so daß gemeinsam mit einer hin- und hergehenden Bewegung durch miteinander zusammenwirkende Schrägflächen gleichzeitig ein Anheben und Absenken der Gabel und somit einer Palette erfolgt, wobei in diesem Fall lediglich relativ geringe Hubhöhen bewältigt werden können.

Anstelle von mit einem Drehantrieb ausgebildeten Manipulatoren, welche üblicherweise eine vergleichsweise geringe Anzahl von Palettenlagerplätzen bzw. Beladestationen bedienen können, welche im wesentlichen entlang eines Kreisbogens angeordnet sein müssen, sind darüber hinaus lineare und üblicherweise mehrere Etagen bzw. Ebenen aufweisende Palettenlade- und -speichersysteme bekannt, bei welchen ein üblicherweise brückenartiger Manipulator entlang von drei im wesentlichen normal aufeinander stehenden Verschieberichtungen bewegbar ist. Derartige lineare Systeme mit üblicherweise mehreren Etagen bzw. Ebenen sind jedoch üblicherweise nur für sehr große Anlagen sinnvoll, da insbesondere der konstruktive und Kostenaufwand zur Konstruktion eines derartigen Linearsystems üblicherweise um wenigstens eine Größenordnung größer als der konstruktive und Kostenaufwand für die oben erörterten Rotationssysteme ist.

Während die eingangs erwähnten, mit einem Drehantrieb versehenen Manipulator vom Rotationstyp somit üblicherweise für kleine Anlagen mit einer vergleichsweise geringen Anzahl von Palettenlager- bzw. -speicherplätzen zum Einsatz gelangen, wobei die damit zusammenwirkenden Maschinen bzw. Werkzeugmaschinen derart ausgebildet sind, daß eine Palette an einer Beladestation mit festgelegtem Ort angeordnet wird, wovon sie durch entsprechende Greifeinrichtungen bzw. Handhabungseinrichtungen von der Maschine, insbesondere Werkzeugmaschine, entnommen wird und worauf nach einer vollständigen Bearbeitung der darauf angeordneten Werkstücke für ein Entladen durch den Manipulator wiederum retourniert wird, sind einen teilweise größeren Durchsatz erlaubende Maschinen, insbesondere Werkzeugmaschinen, bekannt, bei welchen eine Zufuhr einer Palette mit zu bearbeitenden Werkstücken an eine Beladestation erfolgt, während bearbeitete Werkstücke wiederum auf einer Palette auf einer üblicherweise benachbart und in Abstand davon angeordneten Entladestation für eine Entfernung durch einen Manipulator bereitgestellt werden. Derartige Maschinen mit einem sogenannten Shuttle-System für die Anordnung jeweils einer Palette zum Beladen und Entladen können von den eingangs genannten Manipulatoren mit Rotationsantrieb nicht bedient werden, da unter Berücksichtigung der Kinematik derartiger Manipulatoren mit einer Bewegung der Gabel für eine Palette in einer im wesentlichen vertikalen Richtung im Sinne eines Anhebens und Absenkens sowie einer Vorwärts- und Rückwärtsbewegung in horizontaler Richtung und einer zusätzlichen Drehbewegung nebeneinander liegende Belade- bzw. Entladestationen nicht bedient werden können. Für derartige Werkzeugmaschinen sind somit Linear-Manipulator-Systeme erforderlich, welche, wie bereits oben erwähnt, mit einem aufgrund der Konstruktion überaus erhöhten Kosteneinsatz verbunden sind, während gegebenenfalls mit einer vergleichsweise geringeren Anzahl von erforderlichen Palettenlager- bzw. -speicherplätzen das Auslangen gefunden werden könnte.

EP 0 063 161 A1, auf die sich der Oberbegriff des Anspruchs 1 stützt, beschreibt einen Manipulator für das Beladen wenigstens einer Maschine mit Paletten. Der Manipulator weist eine Gabel auf, die an einem Support beweglich gelagert ist. Die Gabel ist dabei in einer im Wesentlichen vertikalen Ebene heb- und senkbar und in Richtung zu und weg von einem Palettenlagerplatz bewegbar. Der Manipulator weist dazu eine erste, vertikal ausgerichtete Bewegungseinrichtung mit einer ersten Antriebsspindel und einer in einem verlagerbaren Gehäuse vorgesehenen, drehfest aufgenommenen Spindelmutter sowie eine zweite, horizontal ausgerichtete Bewegungseinrichtung mit zwei in dem Gehäuse gelagerten Tragarmen und einer zweiten Antriebsspindel auf. Die Gabel ist an den Tragarmen aufgenommen. Eine Bewegung der Gabel in vertikaler Richtung wird durch Verlagerung des Gehäuses mittels der ersten Bewegungseinrichtung ermöglicht. Eine Bewegung der Gabel in horizontaler Richtung zu und weg von dem Palettenlagerplatz wird durch horizontale Verlagerung der Tragarme durch das Gehäuse hindurch ermöglicht. Der Support des Manipulators ist um eine senkrechte Achse drehbar, um eine Schwenkbewegung der Gabel in einer horizontalen Ebene zu ermöglichen.

JP 5 254 665 A zeigt einen Manipulator zum Bewegen von Gegenständen zwischen Lagerplätzen. Die Lagerplätze sind entlang zweier einander gegenüberliegender Seiten einer linearen Transportgasse angeordnet. Der Manipulator ist entlang der linearen Transportgasse linear bewegbar und weist einen Greifarm auf. Der Greifarm ist rechtwinklig gebogen ausgebildet und fest mit dem Manipulator verbunden. Der Manipulator ist um eine vertikale Drehachse drehbar, wobei der Greifarm bei einer Drehbewegung des Manipulators in einer Kreisbewegung geschwenkt wird. Durch Überlagerung einer Schwenkbewegung des Greifarms und lineare Verschiebung des Manipulators entlang der linearen Transportgasse sind so Lagerplätze in unterschiedlich großer Entfernung von der linearen Bewegungsbahn des Manipulators erreichbar.

US 4,645,408 A beschreibt einen als Roboterarm ausgebildeten Manipulator mit einem Greifelement. Das Greifelement ist mittels eines Gelenkvielecks und einer Hebelverbindung in einer vertikalen Richtung heb- und senkbar sowie in eine horizontale Richtung hin- und herbewegbar. Das Gelenkvieleck ist als Viergelenk ausgebildet und umfasst einen mit dem Greifelement verbundenen Hebelarm, einen ersten Lenker, einen zweiten Lenker und ein plattenartiges Element. Der Hebelarm bildet dabei eine Koppel und das plattenartige Element eine Basis des Viergelenks. Die Hebelverbindung umfasst einen ersten Hebelarm, einen zweiten Hebelarm, das plattenartige Element und ein Basiselement. Der erste Hebelarm und der zweite Hebelarm greifen jeweils an einem ersten Ende an das plattenartige Element und an einem zweiten, von dem ersten Ende abgewandten Ende an das Basiselement an. Das Basiselement ist fest mit einem Stellglied eines ersten Verstellantriebs verbunden. Der Verstellantrieb ist als in vertikaler Richtung betätigbarer Linearantrieb ausgebildet und an einem Support des Manipulators befestigt. Mittels des Stellglieds sind die Hebelverbindung, das Gelenkvieleck und das Greifelement in vertikaler Richtung verlagerbar. Der Manipulator umfasst ferner einen zweiten Verstellantrieb, der als in horizontaler Richtung betätigbarer Linearantrieb ausgebildet ist. Der zweite Verstellantrieb weist ein in horizontaler Richtung verstellbares Stellglied auf, an dem ein erster Antriebslenker und ein zweiter Antriebslenker jeweils an einem ersten Ende in einem gemeinsamen Gelenkpunkt gelenkig aufgenommen sind. Der erste Antriebslenker greift an seinem von dem Stellglied entfernten zweiten Ende an den ersten Lenker des Gelenkvielecks an. Weiter greift der zweite Antriebslenker an seinem von dem Stellglied entfernten Ende an den ersten Hebelarm an. Der erste Antriebslenker, der zweite Antriebslenker, der erste Hebelarm der Hebelverbindung und der erste Lenker des Gelenkvielecks bilden gemeinsam eine Antriebsviergelenkanordnung aus. Die Antriebsviergelenkanordnung koppelt jede Bewegung des Gelenkvielecks und der Hebelverbindung miteinander, wobei eine solche Bewegung sowohl mittels des ersten Verstellantriebs durch vertikale Bewegung des Basiselements als auch mittels des zweiten Verstellantriebs durch horizontale Bewegung des gemeinsamen Gelenkpunkts von erstem Antriebslenker und zweitem Antriebslenker ansteuerbar ist.

Es ist die Aufgabe der Erfindung, einen Manipulator anzugeben, mit dem bei geringer Aufnahmehöhe von Gegenständen eine große Hubhöhe erreichbar ist, und mit dem räumlich verteilte Palettenlagerplätze beladbar sind.

Zur Lösung dieser Aufgaben weist ein Manipulator der eingangs genannten Art die kennzeichnenden Merkmale des Anspruchs 1 auf. Der Support der Gabel ist zusätzlich entlang einer linearen Richtung, die parallel zu zwei nebeneinander liegenden Patettenaufnahmeplätzen der Maschine und/oder wenigstens zwei nebeneinanderliegenden Palettenlagerplätzen des Speichers verläuft, wenigstens in einem Ausmaß verschiebbar, daß durch die Gabel des Manipulators jeweils eine Palette an den Palettenaufnahmeplätzen der Maschine und/oder Palettenlagerplätzen des Speichers aufnehmbar und/oder anordenbar ist. Dadurch, daß der Support der Gabel zusätzlich in einer linearen Richtung und somit im wesentlichen entlang einer vierten Bewegungsachse bewegbar ist, gelingt es, mit einem üblicherweise einfach aufzubauenden und kostengünstigen Manipulator vom Rotationstyp auch Maschinen, insbesondere Werkzeugmaschinen, zu bedienen, bei welchen eine Beladestation und Entladestation im wesentlichen nebeneinander angeordnet sind. Neben der bei den bekannten Manipulatoren vom Rotationstyp vorgesehenen, drei Bewegungsachsen bzw. -richtungen durch ein Bewegen der Gabel zur Aufnahme einer Palette in einer vertikalen Ebene im Sinne eines Anhebens und Absenkens sowie einer horizontalen Vorwärts- und Rückwärtsbewegung und der im Support integrierten Drehbewegung um eine Im wesentlichen vertikale Achse wird somit zumindest entsprechend der Länge bzw. Erstreckung von nebeneinander liegenden Be- und Entladestationen einer nachgeschalteten Werkzeugmaschine eine zusätzliche, lineare Bewegung des Manipulators bzw. zumindest des Supports der Gabel sichergestellt. Demgemäß müssen die von einem derartigen Manipulator vom Rotationstyp zu bedienenden Palettenlager- bzw. -speicherplätze und Belade- bzw. Entladestationen unter Berücksichtigung der Drehachse nicht mehr vollständig entlang eines Kreisbogens angeordnet werden, so daß eine entsprechende Anpassung und insbesondere Kombination eines kostengünstigen Manipulators vom Rotationstyp auch mit einer üblicherweise einen größeren Durchsatz ermöglichenden Werkzeugmaschine mit getrennter Be- und Entladestation ermöglicht wird. Zusätzlich bzw, alternativ zur Möglichkeit einer Verwendung des erfindungsgemäßen Manipulators mit zusätzlicher linearer Bewegungsrichtung bzw. -achse können von einem derartigen Manipulator auch nebeneinander liegende Palettenlager- bzw. -speicherplätze eines Speichers bedient werden, so daß entsprechend gegebenenfalls bestehenden Erfordernissen eine Erweiterung einer mit einem derartigen Manipulator vom Rotationstyp ausgerüsteten Belademaschine bzw. -vorrichtung im Hinblick auf eine Vergrößerung der Speichermöglichkeiten erzielbar ist, ohne unmittelbar auf ein teureres und aufwendigeres Linearsystem von Manipulatoren zurückgreifen zu müssen, wie dies eingangs erörtert wurde. Es lassen sich somit mit dem erfindungsgemäßen Manipulator bei geringem zusätzlichem Aufwand für eine üblicherweise einfache, zusätzliche, lineare Bewegung des Supports des Manipulators entsprechende Erweiterungen des Einsatzgebiets eines Manipulators vom Rotationstyp zur Verfügung stellen.

Für eine besonders einfache und zuverlässige Bewegbarkeit des Manipulators wird gemäß einer bevorzugten Ausführungsform vorgeschlagen, daß der Support entlang einer linearen Führung über einen Verschiebeantrieb bewegbar ist.

Wie oben bereits angedeutet, läßt sich durch die erfindungsgemäß vorgesehene, zusätzliche, lineare Bewegungsrichtung bzw. -achse des erfindungsgemäßen Manipulators bzw. des Supports der Gabel des erfindungsgemäßen Manipulators eine entsprechende Erweiterung des Einsatzgebiets von Manipulatoren vom Rotationstyp zur Verfügung stellen, wobei in diesem Zusammenhang darüber hinaus vorgeschlagen wird, daß der Support entlang der linearen Richtung über eine Länge verschiebbar ist, die der Anordnung einer Mehrzahl von nebeneinander liegenden Maschinen und/oder Palettenlagerplätzen des Speichers entspricht, wie dies einer weiters bevorzugten Ausführungsform des erfindungsgemäßen Manipulators entspricht. Es läßt sich somit ein kostengünstig herzustellender Manipulator vom Rotationstyp beispielsweise für eine Mehrzahl von nebeneinander angeordneten Maschinen, insbesondere Werkzeugmaschinen, einsetzen, welche gegebenenfalls unterschiedlich dahingehend ausgebildet sein können, daß Maschinen mit einer kombinierten Be- und Entladestation, welche im Zusammenhang mit üblichen Beladeeinrichtungen mit einem Manipulator vom Rotationstyp bedienbar sind, als auch Maschinen mit voneinander getrennten und nebeneinander liegenden Be- und Entladestationen eingesetzt bzw. bedient werden können. Darüber hinaus ergibt sich die Möglichkeit, durch den erfindungsgemäßen Manipulator vom Rotationstyp eine Vergrößerung der Speicher- bzw. Lagerplätze für Paletten durch Vorsehen einer entsprechenden Längserstreckung der Führung bzw. der Verschiebung des Manipulators und Anordnung einer entsprechenden Mehrzahl von Palettenlager- bzw. -speicherplätzen im wesentlichen parallel zu der zusätzlichen Bewegungsrichtung bzw. -achse des Manipulators zur Verfügung zu stellen.

Wie oben bereits erwähnt, können für den erfindungsgemäßen Manipulator im wesentlichen Manipulatoren vom Rotationstyp eingesetzt werden, welche in konstruktiv einfacher und kostengünstiger Weise um die Möglichkeit einer zusätzlichen, linearen Bewegung ergänzt werden, so daß erfindungsgemäß bevorzugt vorgeschlagen wird, daß die Gabel in an sich bekannter Weise entlang einer Schlittenführung am Support in der vertikalen Ebene hin- und herbewegbar ist und über eine Hubvorrichtung in einer im wesentlichen auf die Erstreckung der Schlittenführung orthogonalen Richtung heb- und senkbar ist.

Bei bekannten Manipulatoren vom Rotationstyp ist üblicherweise eine aufwendige Mechanik im Bereich des Schlittens sowie der Hubvorrichtung zur Erzielung der im wesentlichen normal aufeinander stehenden Bewegungen der Gabel in einer vertikalen Ebene erforderlich, wobei sich darüber hinaus bei derartigen bekannten Manipulatoren vom Rotationstyp üblicherweise eine vergleichsweise große Mindesthöhe für die Aufnahme einer mit zu bearbeitenden Werkstücken zu beladenden Palette aus einer Beladestation ergibt. Derart erfolgt eine üblicherweise manuell erfolgende Beladung einer Palette auf einer relativ großen Höhe, so daß entweder Stufen bzw. Rampen beim Beladen der Palette von dem Bedienungspersonal überwunden werden müssen oder gegebenenfalls ein großes Gewicht aufweisende, zu bearbeitende Werkstücke entsprechend hoch angehoben werden müssen.

Im Hinblick auf eine weitere Vereinfachung eines Manipulators vom Rotationstyp und beispielsweise bei konstruktiv einfacher und kostengünstiger Gestaltung eines derartigen Manipulators vom Rotationstyp, um größere, unterschiedliche Hubhöhen bewältigen zu können und eine Absenkung der Gabel des Manipulators auf gegenüber bekannten Ausführungsformen geringere Ladehöhen zu ermöglichen, wird darüber hinaus vorgeschlagen, daß die Lagerung der Gabel am Support über eine mit einem Gelenkvieleck, insbesondere im wesentlichen Gelenkparallelogramm, gekoppelte Hebelverbindung an dem Support erfolgt und daß die Gabel über zwei voneinander getrennte Verstellantriebe, welche an unterschiedlichen Stellen der Hebelverbindung und/oder des Gelenkvielecks angreifen, in der im wesentlichen vertikalen Ebene heb- und senkbar und in Richtung zu und weg von einem Palettenlagerplatz bewegbar ist.

Da eine Bewegung der Gabel in der im wesentlichen vertikalen Ebene im Hinblick auf ein Anheben und Absenken sowie eine Bewegung in Richtung zu und weg von einem Palettenlagerplatz über eine mit einem Gelenkvieleck, insbesondere im wesentlichen Gelenkparallelogramm, gekoppelte Hebelverbindung an dem Support vorgenommen wird, wird ermöglicht, daß mit einfach herstellbaren und gegenüber Präzisionsführungen verschleißarmen bzw. im wesentlichen verschleißfreien Konstruktionsteilen das Auslangen gefunden werden kann. Durch Vorsehen des Gelenkvielecks, insbesondere Gelenkparallelogramms, als auch der mit dem Support gekoppelten Hebelverbindung läßt sich entsprechend den gewünschten, zu erzielenden Hubhöhen ein großer Hubhöhenbereich überstreichen, so daß auch beispielsweise ein Absenken der Gabel zur Aufnahme einer Palette auf Höhen erfolgen kann, welche im wesentlichen im Bodenbereich bzw. Bereich der Anordnung des Drehgelenks des Manipulators im bzw. am Support liegt. Es kann somit neben einer Erweiterung des Einsatzbereichs durch Vorsehen der zusätzlichen, linearen Bewegungsrichtung bzw. -achse eine Herabsetzung insbesondere der Aufnahmehöhe der Gabel für Paletten erzielt werden, da ein für die Bereitstellung der Schlittenführung sowie der Hubvorrichtung bei bekannten Ausbildungen vorzusehender Raum bzw. Abstand in vertikaler Richtung bei der erfindungsgemäßen Ausführungsform des Manipulators weitestgehend vermieden werden kann. Durch die darüber hinaus vorgesehenen, zwei voneinander getrennten Verstellantriebe läßt sich über die Kopplung des Gelenkvielecks bzw. Gelenkparallelogramms mit der Hebelverbindung ein entsprechend großer Bereich von Bewegungen bzw. einzunehmenden Positionen der Gabel sowohl in Höhenrichtung als auch in einer im wesentlichen horizontalen Richtung erzielen, so daß ein entsprechend großer Arbeits- bzw. Betätigungsbereich durch den erfindungsgemäßen Manipulator zur Verfügung gestellt wird. Darüber hinaus ist durch Vorsehen von Hebel- bzw. Gelenkverbindungen davon auszugehen, daß ein Verschleiß mit relativ zueinander bewegbaren Führungen bzw. Schlitten und Hubelementen stark reduziert ist, da insbesondere im Bereich der Anlenkung der einzelnen Hebelarme bzw. -elemente und Teile des Gelenkvielecks entsprechend widerstandsfähige und verschleißarme bzw. verschleißfreie Gelenkteile, insbesondere Gleitbuchsen oder dgl., eingesetzt werden können.

Zur Erzielung einer gewünschten Stabilität und insbesondere zur Aufnahme von großen Kräften, welche bei gegebenenfalls größere Abmessungen und ein großes Gewicht aufweisenden, zu bearbeitenden Werkstücken auftreten, ist gemäß einer weiters bevorzugten Ausführungsform vorgesehen, daß sämtliche Elemente des Gelenkvielecks sowie der Hebelverbindung jeweils symmetrisch zu dem die Rotationsachse der Gabel definierenden bzw. aufweisenden Support angeordnet sind und zu beiden Seiten mit der Gabel koppelbar sind. Durch die im wesentlichen symmetrische Anordnung der einzelnen, bewegbaren Elemente zu dem die Rotationsachse der Gabel definierenden bzw. aufweisenden Support auch im Bereich eines an sich bekannten Drehantriebs bzw. Drehgelenks, welcher(s) im Support integriert ist und eine Bewegung um eine im wesentlichen vertikale Drehachse zur Verfügung stellt, kann eine entsprechend stabile Konstruktion mit einfach herstellbaren Bauteilen erzielt werden.

Zur Erzielung eines gewünschten, großen Hubbereichs und Bewegungsbereichs in im wesentlichen horizontaler Richtung neben der erfindungsgemäß vorgesehenen, zusätzlichen, linearen Bewegungsachse ist vorgesehen, daß jeweils zwei vorzugsweise im wesentlichen vertikal verlaufende und in Abstand voneinander an einer Basisplatte des Supports schwenkbar angelenkte Hebelarme vorgesehen sind, welche an ihren von der Basisplatte abgewandten Enden jeweils an einem plattenartigen Element angreifen, an welchem vorzugsweise darüber hinaus jeweils ein Ende der das Gelenkvieleck ausbildenden, im wesentlichen parallel zueinander verlaufenden Träger bzw. Balken angelenkt ist, und daß die Gabel vorzugsweise an den jeweils von der Verbindung mit dem plattenförmigen Element abgewandten Enden mit den im wesentlichen zueinander parallelen Trägem des Gelenkvielecks über einen weiteren Hebelarm gekoppelt ist. Es kann somit mit einer möglichst geringen Anzahl von Gelenkverbindungen bzw. Anlenkstellen das Auslangen gefunden werden, so daß insgesamt eine stabile und robuste Konstruktion auch zur Aufnahme großer Kräfte zur Verfügung gestellt werden kann.

Um eine im wesentlichen jeweils horizontale Anordnung der Gabel unabhängig von der Hubposition und/oder Position in horizontaler Richtung sicherzustellen, wird darüber hinaus vorgeschlagen, daß der mit der Gabel gekoppelte Hebelarm gebogen bzw. abgewinkelt ausgebildet ist, wie dies einer weiters bevorzugten Ausführungsform des erfindungsgemäßen Manipulators entspricht.

Zur weiteren Vereinfachung der Anlenkung als auch zur Einbringung großer Kräfte wird darüber hinaus bevorzugt vorgeschlagen, daß ein Anlenkpunkt eines im wesentlichen vertikalen Hebelarms und ein Anlenkpunkt eines Trägers des Gelenkvielecks zusammenfallen.

Für eine möglichst einfache und zuverlässige Steuerung der aufeinander abzustimmenden Bewegungen der Verstellantriebe zur Erzielung gewünschter Hubpositionen der Gabel und somit einer darauf aufgenommenen Palette als auch der jeweiligen, gewünschten, horizontalen Position wird darüber hinaus vorgeschlagen, daß ein Verstellantrieb an den plattenförmigen Elementen der Hebelverbindung gelagert ist und ein Verstellantrieb an einem der im wesentlichen vertikal angeordneten Hebelarme angreift, wie dies einer weiters bevorzugten Ausführungsform des erfindungsgemäßen Manipulators entspricht.

Zur Aufnahme großer Kräfte und somit zur Ermöglichung eines Einsatzes möglichst kleinbauender Verstellantriebe wird darüber hinaus bevorzugt vorgeschlagen, daß die Verstellantriebe in im wesentlichen normal aufeinander wirkenden Richtungen im wesentlichen in der im wesentlichen vertikalen Ebene einer Verstellung der Gabel angeordnet sind. In diesem Zusammenhang wird erfindungsgemäß darüber hinaus bevorzugt vorgeschlagen, daß die Verstellantriebe von Spindelantrieben oder Servomotoren gebildet sind, so daß bekannte und in weiten Bereichen einsetzbare, entsprechend leicht steuer- bzw. regelbare Antriebe eine zuverlässige und präzise Bewegung der Gabel des Manipulators und somit damit zu transportierender Paletten ermöglichen.

Zur Erfüllung der obengenannten Aufgaben ist darüber hinaus bei einer Beladevorrichtung für wenigstens eine Maschine, insbesondere Werkzeugmaschine, umfassend eine Beladestation für jeweils eine Palette mit einer Mehrzahl von zu bearbeitenden Werkstücken, wenigstens eine Ent- bzw. Beladestation für die Maschine, insbesondere Werkzeugmaschine, und eine Mehrzahl von Palettenlager- bzw. -speicherplätzen zur Anordnung bzw. Aufnahme von jeweils einer Palette vorgesehen, daß sie einen Manipulator der Erfindung oder einer bevorzugten Ausführungsform davon zum Aufnehmen und Transportieren jeweils einer Palette zwischen den einzelnen Palettenlagerplätzen und Beladestationen aufweist. Wie oben bereits angeführt, ist es somit möglich, mit einem konstruktiv einfachen und somit kostengünstigen Manipulator ein Einsatzbereich eines Manipulators vom Rotationstyp im Hinblick auf eine Vergrößerung der Anzahl von Palettenlager- bzw. -speicherplätzen als auch für einen Einsatz in Kombination mit wenigstens einer Maschine, insbesondere Werkzeugmaschine, mit voneinander getrennten und im wesentlichen nebeneinander liegenden Ent- bzw. Beladestationen zur Verfügung zu stellen.

Im Hinblick auf eine Vergrößerung des Einsatzbereichs eines derartigen erfindungsgemäßen Manipulators vom Rotationstyp in einer erfindungsgemäßen Beladevorrichtung wird darüber hinaus gemäß einer bevorzugten Ausführungsform vorgeschlagen, daß eine lineare Führung vorgesehen ist, entlang welcher eine Mehrzahl von Ent- bzw. Beladestationen einer Mehrzahl von Maschinen und/oder eine Mehrzahl von Palettenspeicherplätzen des Speichers angeordnet ist bzw. sind. Wie oben bereits ausgeführt, kann eine derartige Führung zur Erzielung einer zusätzlichen, im wesentlichen linearen Bewegungsrichtung bzw. -achse kostengünstig zur Verfügung gestellt werden und es kann gegebenenfalls und in einfacher Weise ein bestehender Manipulator vom Rotationstyp durch Vorsehen einer derartigen linearen Führung im Zusammenwirken mit einem entsprechenden Verstellantrieb nachgerüstet bzw. erweitert werden.

Die Erfindung wird nachfolgend anhand von in der beiliegenden Zeichnung schematisch dargestellten Ausführungsbeispielen näher erläutert. In dieser zeigen:
Fig. 1 eine schematische Draufsicht auf eine erfindungsgemäße Beladevorrichtung mit einer Mehrzahl von Palettenlager- bzw. -speicherplätzen und Beladestationen;
Fig. 2 in einer perspektivischen Ansicht eine erste Ausführungsform eines erfindungsgemäßen Manipulators zum Einsatz in der in Fig. 1 schematisch angedeuteten Beladevorrichtung;

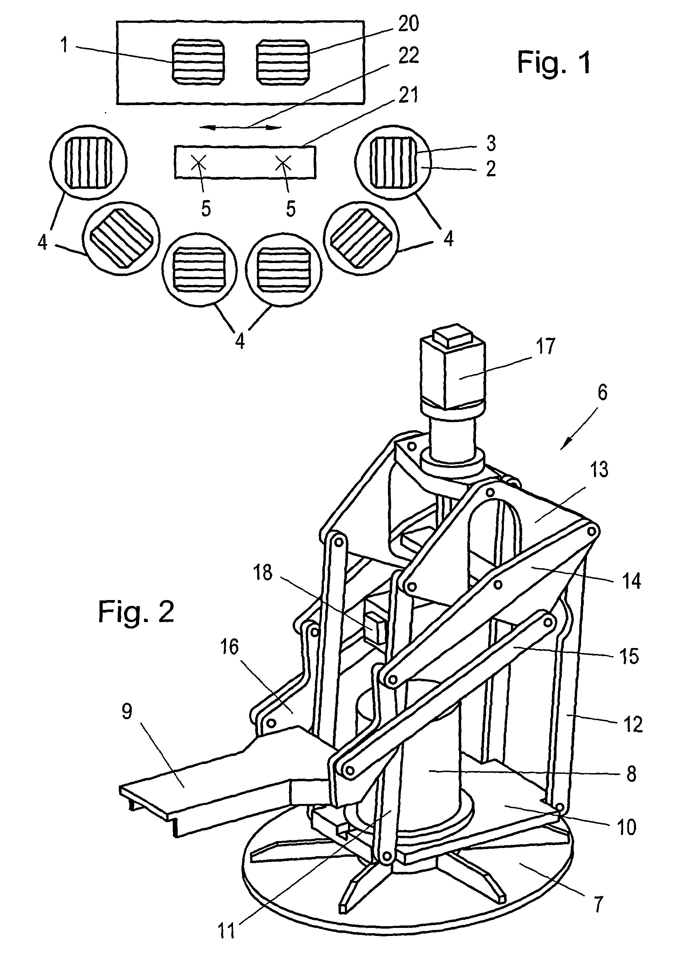

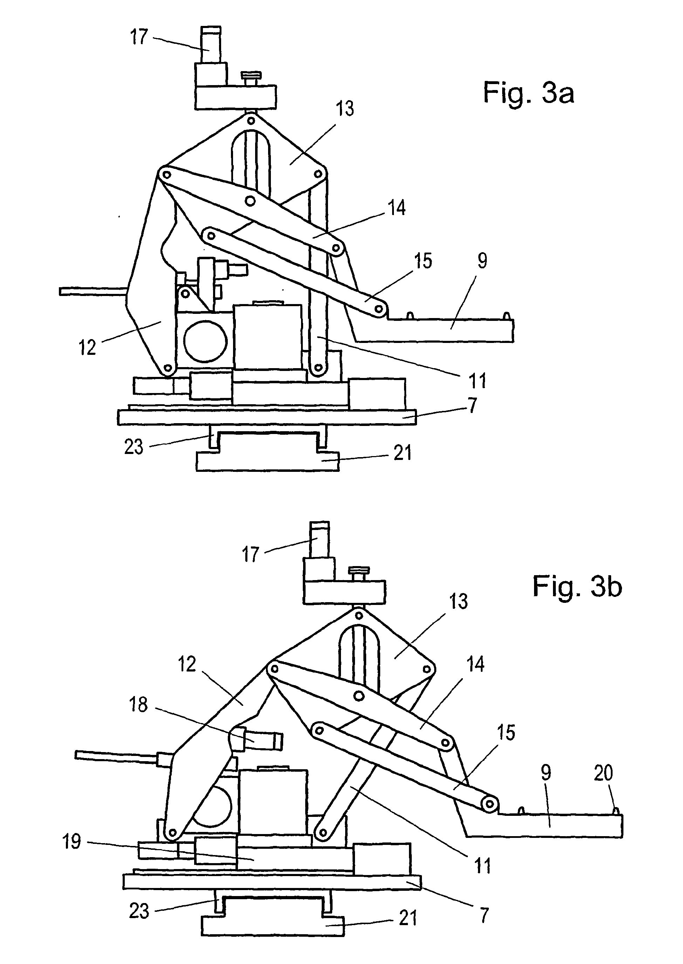

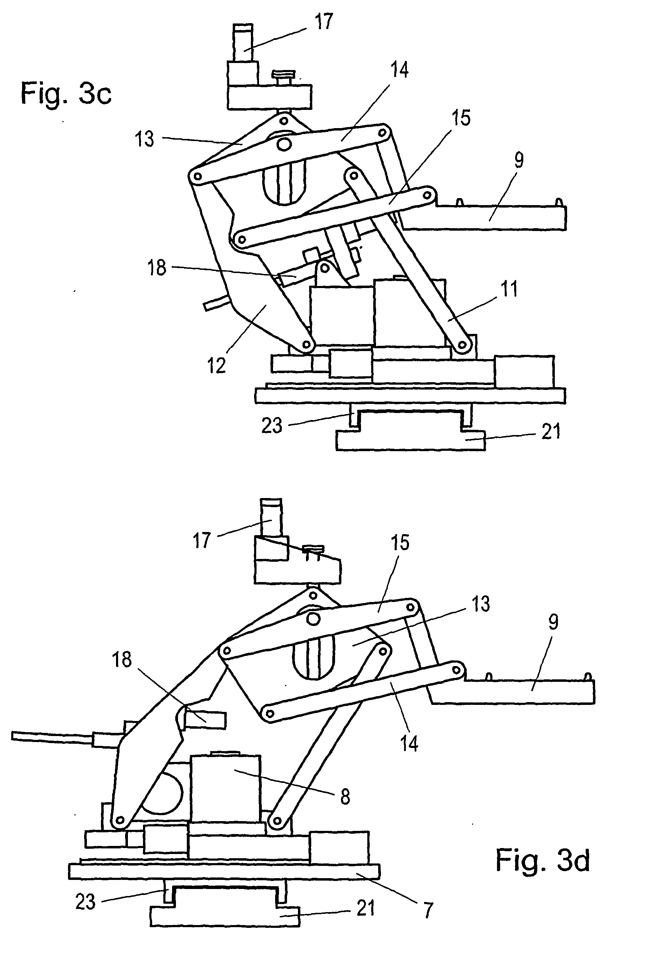

Fig. 3 jeweils in schematischer Seitenansicht unterschiedliche Stellungen bzw. Positionen des Manipulators gemäß Fig. 2, wobei Fig. 3a eine tiefe Position der Gabel des erfindungsgemäßen Manipulators in zurückgezogener Position bzw. in unmittelbarer Nachbarschaft am Support des Manipulators zeigt; Fig. 3b eine ebenfalls abgesenkte Position der Gabel in von dem Support in horizontaler Richtung wegbewegter Richtung zeigt; Fig. 3c ähnlich der Anordnung gemäß Fig. 3a eine angehobene Position der Gabel in einer zurückgezogenen Position zeigt und Fig. 3d eine angehobene Position der Gabel in von dem Support erstreckter bzw. vorragender Position zeigt;
Fig. 4 eine schematische Teilansicht einer Ausführungsform eines nicht erfindungsgemäßen Manipulators zum Einsatz in einer Beladevorrichtung;
Fig. 5 in einer zu Fig. 1 ähnlichen Darstellung eine schematische Draufsicht auf eine abgewandelte Ausführungsform einer erfindungsgemäßen Beladevorrichtung mit einer erhöhten Anzahl von Palettenlager- bzw. -speicherplätzen und mit der Beladevorrichtung zusammenwirkenden Maschinen, insbesondere Werkzeugmaschinen; und
Fig. 6 in einer zu Fig. 5 ähnlichen Darstellung eine schematische Draufsicht auf eine weitere abgewandelte Ausführungsform einer erfindungsgemäßen Beladevorrichtung mit einer wiederum erhöhten Anzahl von Palettenlager- bzw. -speicherplätzen und einer mit der Beladevorrichtung zusammenwirkenden Maschine, insbesondere Werkzeugmaschine.

In Fig. 1 ist ein Schema einer Betadevorrichtung dargestellt, wobei mit 1 eine Beladestation und mit 20 eine Entladestation für eine nachfolgende und nicht näher dargestellte Maschine, insbesondere Werkzeugmaschine, angedeutet ist. Mit 2 ist eine Beladestation einer jeweils mit 3 bezeichneten Palette mit nicht näher dargestellten, in der der Beladestation 1 und Entladestation 20 nachgeschalteten Werkzeugmaschine zu bearbeitenden Werkstücken angedeutet.

Darüber hinaus ist bei der Darstellung gemäß Fig. 1 eine Mehrzahl von Palettenlager- bzw. -speicherplätzen 4 angedeutet, auf welchen jeweils eine Palette 3 anordenbar ist. Ein in den nachfolgenden Figuren im Detail dargestellter Manipulator vom Rotationstyp ist entlang einer mit 21 angedeuteten Führung in einer linearen Richtung entsprechend dem Doppelpfeil 22 bewegbar, wobei Positionen eines Zentrums 5 des Manipulators vom Rotationstyp, wie dies anhand der nachfolgenden Figuren im Detail erörtert werden wird, die Drehachse des Manipulators an der Beladestation 1 sowie Entladestation 20 der nachgeschalteten Werkzeugmaschine bei einer Handhabung von Paletten 3 im Bereich der Beladestation 1 sowie der Entladestation 20 darstellen wird.

Für die Bedienung der Beladestation 2 sowie der darüber hinaus vorgesehenen Palettenlager- bzw. -speicherplätze 4 erfolgt eine Bewegung eines in den nachfolgenden Figuren dargestellten Manipulators vom Rotationstyp entlang der schematisch angedeuteten Führung 21.

Im Einsatz wird über einen in den nachfolgenden Figuren darstellten Manipulator eine Palette 3 von der beispielsweise manuell zu bedienenden Beladestation 2 entweder unmittelbar in die Beladestation 1 der nachgeschalteten Maschine, insbesondere Werkzeugmaschine, oder an einen Palettenlager- bzw. -speicherplatz 4 gebracht, um günstigerweise eine Mehrzahl von Paletten für eine Bearbeitung in der der Beladestation 1 nachgeschalteten Werkzeugmaschine vorbereiten zu können. Durch Vorsehen einer Mehrzahl von Palettenlager- bzw. -speicherplätzen 4 wird es somit möglich, eine Vielzahl von jeweils auf einer Palette 3 gelagerten, zu bearbeitenden Werkstücken vorzubereiten, so daß in weiterer Folge über einen vergleichsweise langen Zeitraum, beispielsweise einen Betrieb der Werkzeugmaschine in der Nacht, eine entsprechend große Anzahl von zu bearbeitenden Werkstücken bearbeitet werden kann, bevor eine neuerliche Vorbereitung von Werkstücken auf jeweils einer Palette 3 in der Beladestation 2 erforderlich ist. Gegebenenfalls kann anstelle einer Speicherposition 4 eine weitere Beladestation für eine zusätzliche Maschine vorgesehen sein und von dem an der Führung 21 verschiebbaren Manipulator bedient werden.

Bei der in Fig. 2 gezeigten, perspektivischen Darstellung einer ersten Ausführungsform eines allgemein mit 6 bezeichneten Manipulators ist ersichtlich, daß auf einer mit 7 bezeichneten Bodenplatte bzw. Halterung ein Support 8 vorgesehen ist, wobei im Support 8 ein in den nachfolgenden Figuren schematisch angedeuteter Drehantrieb integriert ist, um bei einer Positionierung der Drehachse des Supports 8 entlang der Führung 21 der Beladevorrichtung gemäß Fig. 1 die angeordneten Palettenlager- bzw. -speicherplätze 4 sowie die Beladestationen 1 und 2 und die Entladestation 20 bedienen zu können.

Für ein Verschieben des Manipulators 6 vom Rotationstyp entlang der Führung 21 der in Fig. 1 dargestellten Belademaschine ist, wie dies in Fig. 3 schematisch angedeutet ist, im Bereich der Basisplatte 7 des Supports ein die Führung bzw. Führungsschiene 21 umgebendes, komplementäres Profil 23 angedeutet, wobei über einen nicht näher dargestellten und an sich bekannten Antrieb eine Relativbewegung des Profils 23 und somit des gesamten Manipulators 6 relativ zur Führung bzw. Führungsschiene 21 erfolgt, um eine Bewegung des Manipulators 6 entsprechend dem Doppelpfeil 22 in Fig. 1 entlang der zusätzlichen, linearen Bewegungsrichtung bzw. -achse zu ermöglichen.

Der Manipulator 6 weist eine Gabel 9 auf, welche zur Aufnahme einer in Fig. 2 nicht näher dargestellten Palette dient. Zur Bewegung der Gabel 9 sowohl in einer Höhenrichtung als auch in einer Richtung in Richtung zu und weg von den in Fig. 1 dargestellten Palettenlager- bzw. -speicherplätzen 4 als auch den Beladestationen 1 und 2 und der Entladestation 20 ist ein Gelenkmechanismus vorgesehen, wobei jeweils zu beiden Seiten des Supports 8 bzw. einer Basisplatte 10 des Supports 8 im wesentlichen vertikal verlaufende Hebelarme 11 und 12 vorgesehen sind, welche mit jeweils einem plattenartigen Element 13 an dem von der Basisplatte 10 abgewandten Ende gekoppelt sind. Darüber hinaus sind zwei im wesentlichen parallele Träger bzw. Balken 14 und 15 vorgesehen, welche mit einem insbesondere abgewinkelten bzw. gekrümmten Hebelarm 16 jeweils gekoppelt sind, an welchem die Gabel 9 angelenkt ist. Durch die im wesentlichen parallelen Träger 14 und 15 sowie die damit verbundenen Hebelelemente bzw. -arme 11 und 12 wird ein Gelenkvieleck, insbesondere Gelenkparallelogramm ausgebildet.

Darüber hinaus sind zwei Verstellantriebe 17 und 18 vorgesehen, welche, wie dies aus den nachfolgenden Figuren deutlicher ersichtlich werden wird, im wesentlichen normal zueinander angeordnet sind bzw. an einzelnen Elementen des Gelenkvielecks sowie den Hebelverbindungen angreifen, um eine Verschiebung bzw. Verlagerung der Gabel 9 in einer im wesentlichen vertikalen Ebene zu ermöglichen.

Im Bereich der Vielzahl von Gelenkverbindungen zwischen den einzelnen Gelenkteilen können jeweils im wesentlichen verschleißarme bzw. verschleißfreie Buchsen bzw. Gelenkbuchsen vorgesehen sein, so daß durch Einsatz einfacher Hebel- bzw. Gelenkelemente ein großer Bewegungsbereich, wie dies aus Fig. 3 deutlicher ersichtlich werden wird, von der Gabel 9 und somit von einer durch die Gabel 9 zu transportierenden Palette überstrichen werden kann.

Die Verstellantriebe 17 und 18 sind in einfacher Weise von Spindelantrieben oder Servomotoren gebildet, welche sich entsprechend genau und einfach steuern lassen, um die Vielzahl von Bewegungen und Positionierungen der Gabel 9, von welchen in Fig. 3 schematisch einige dargestellt sind, ermöglichen zu können. Die Verstellantriebe 17 und 18 sind hiebei mit einer entsprechenden Steuerung bzw. Regelung, welche an sich bekannt ist und nicht näher im Detail erörtert ist, zur Erzielung der unterschiedlichen Stellungen des Manipulators, insbesondere der Gabel 9 desselben, gekoppelt und von dieser ansteuerbar. Ebenso ist der im Support 8 aufgenommene Drehantrieb für eine Bewegung um die Drehachse mit der nicht näher dargestellten Regel- bzw. Steuervorrichtung gekoppelt.

In den Darstellungen gemäß Fig. 3a bis 3d sind unterschiedliche Positionen bzw. Stellungen der Gabel 9 des Manipulators 6 von Fig. 2 angedeutet, wobei ersichtlich ist, daß durch Vorsehen des Gelenkvielecks, welches insbesondere die zwei im wesentlichen parallelen Balken bzw. Träger 14 und 15 umfaßt, als auch der Hebelverbindungen durch Bereitstellung der im wesentlichen vertikalen Hebelarme 11 und 12 als auch des plattenartigen Elements 13 die Gabel 9 von den in Fig. 3a und 3b dargestellten, abgesenkten Positionen in die in Fig. 3c und 3d dargestellten bzw. angedeuteten, angehobenen Positionen bewegbar ist, so daß ein großer Bewegungsbereich der Gabel 9 und somit einer damit zu transportierenden Palette überstrichen werden kann.

Aus den Darstellungen gemäß Fig. 3b bis 3d ist darüber hinaus der schematisch mit 19 angedeutete Drehantrieb ersichtlich.

Zur korrekten bzw. sicheren Positionierung einer an der Gabel 9 aufzunehmenden Palette sind darüber hinaus Zapfen bzw. Stifte 20 angedeutet.

Durch eine entsprechende Steuerung der im wesentlichen normal aufeinander angeordneten Verstellantriebe 17 und 18 sowie geeignete Wahl der Anlenkpunkte an unterschiedlichen Elementen der Gelenkverbindung 14 und 15 sowie Hebelverbindung 11, 12 und 13 läßt sich somit entsprechend den Anforderungen ein großer Bewegungsbereich sowohl in Höhenrichtung, wie dies aus einem Vergleich beispielsweise von Fig. 3b und 3c ersichtlich ist, als auch in horizontaler Richtung der Gabel 9 sowie einer damit zu transportierenden Palette erzielen.

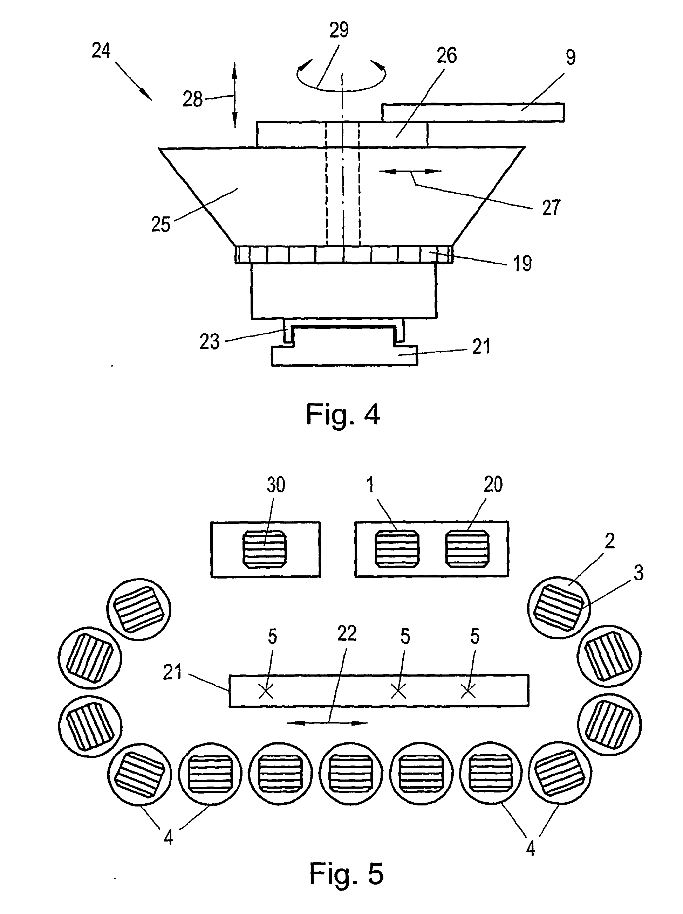

In Fig. 4 ist eine abgewandelte Ausführungsform eines Manipulators 24 angedeutet, wobei an einem Support 25 ein Schlitten 26 zur Lagerung bzw. Halterung der wiederum mit 9 bezeichneten Gabel zur Aufnahme einer nicht näher dargestellten Palette entlang des Doppelpfeils 27 linear verschiebbar ist. Der Schlitten 26 ist darüber hinaus durch eine an sich bekannte Hubvorrichtung entsprechend dem Doppelpfeil 28 heb- und senkbar, so daß durch die aufeinander normal stehenden Bewegungsrichtungen entsprechend den Pfeilen 27 und 28 die Gabel 9 in einer im wesentlichen vertikalen Ebene sowohl heb- und senkbar als auch vorwärts und rückwärts zur Bedienung der einzelnen Palettenlager- bzw. -speicherplätze 4 als auch der Beladestationen 1 und 2 sowie der Entladestation 20 der Beladevorrichtung gemäß Fig. 1 bewegbar ist.

Über einen wiederum mit 19 bezeichneten Drehantrieb erfolgt eine Rotationsbewegung entsprechend dem Pfeil 29, wobei ähnlich wie bei der Ausführungsform gemäß Fig. 2 und 3 unterhalb des Rotationsantriebs 19 ein zur Führung 21 komplementäres Profil 23 für die Bewegung des Manipulators 24 entlang der zusätzlichen, linearen Bewegungsrichtung bzw. -achse zur Verfügung gestellt ist.

Ein derartiger Manipulator 24 vom Rotationstyp gemäß Fig. 4 ist Fachleuten in unterschiedlichen Ausführungsformen bekannt, so daß eine detailliertere und ergänzende Erörterung entbehrlich ist.

In Fig. 5 ist eine schematische Draufsicht auf eine abgewandelte Ausführungsform einer Beladevorrichtung dargestellt, wobei neben einer Beladestation 2 für eine Vorbereitung von Gegenstände, insbesondere zu bearbeitende Werkstücke, tragenden Palette 3 eine gegenüber der Ausführungsform von Fig. 1 stark erhöhte Anzahl von Palettenlager- bzw. -speicherplätzen 4 zur Verfügung gestellt ist.

Darüber hinaus ist neben der in Fig. 1 dargestellten Beladestation 1 sowie Entladestation 20 für eine nicht näher dargestellte, nachgeschaltete Maschine, insbesondere Werkzeugmaschine, eine zusätzliche Beladestation 30 für eine wiederum nicht näher dargestellte, nachgeordnete Maschine, insbesondere Werkzeugmaschine, angedeutet, wobei die Beladestation 30 zur Aufnahme einer Palette 3 mit zu bearbeitenden Werkstücken als auch gleichzeitig als Entladestation für bearbeitete Werkstücke dient.

Ähnlich wie bei der Ausführungsform gemäß Fig. 1 ist wiederum eine mit 21 angedeutete Führung vorgesehen, entlang welcher ein Manipulator vom Rotationstyp, wie er in den vorangegangenen Figuren dargestellt ist, entlang des Doppelpfeils 22 und somit entlang einer zusätzlichen, linearen Bewegungsrichtung bzw. -achse bewegbar ist. Mit 5 sind wiederum Positionen der Drehachse des anzuordnenden Manipulators bei einer Bedienung der Entlade- bzw. Beladestationen 1, 2 und 30 angedeutet.

In ähnlicher Weise nimmt die Drehachse 5 bzw. das Zentrum eines in Fig. 5 nicht näher dargestellten Manipulators unterschiedliche Positionen entlang der Führung 21 zur Bedienung der Mehrzahl von Palettenlager- bzw. -speicherplätzen ein.

Alternativ zu den in Fig. 1 und Fig. 5 dargestellten Beladevorrichtungen kann entsprechend den Erfordernissen und dem Raumangebot jeweils ein Wechsel zwischen Belade- bzw. Entladestationen 1, 2 und 30 und Palettenlager- bzw. -speicherplätzen 4 vorgenommen werden.

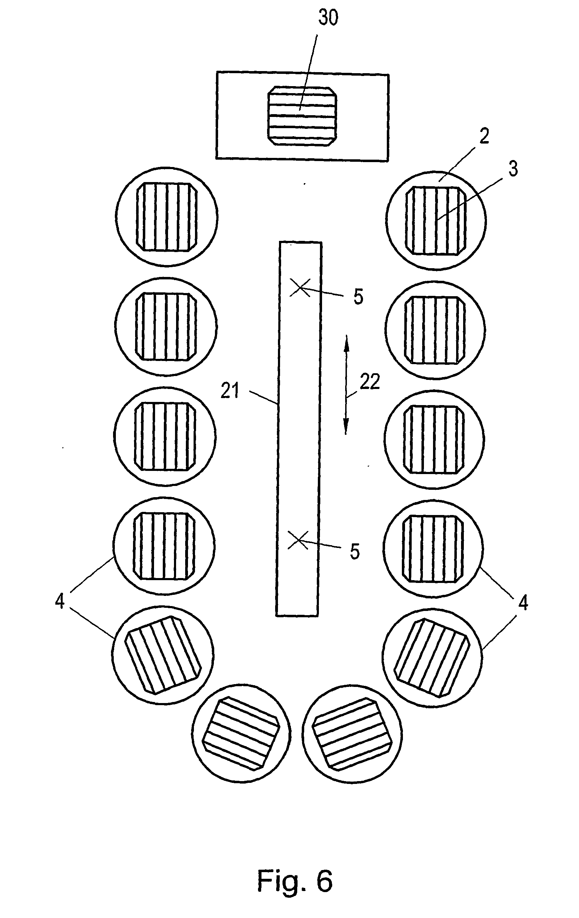

In diesem Zusammenhang wird in Fig. 6 eine schematische Draufsicht auf eine weitere abgewandelte Ausführungsform dargestellt, wobei in einem Endabschnitt bzw. Kopfbereich der wiederum mit 21 angedeuteten Führung bzw. Führungsschiene eine kombinierte Belade- und Entladestation 30 einer nachgeschalteten, nicht näher dargestellten Maschine, insbesondere Werkzeugmaschine, angeordnet ist, während entlang der Führung bzw. Führungsschiene 21 neben einer Beladestation 2 zur Vorbereitung von Paletten 3 eine Mehrzahl von Palettenlager- bzw. -speicherplätzen 4 angeordnet ist, welche durch ein Bewegen entsprechend dem Doppelpfeil 22 entlang der linearen Führung 21 eines Manipulators 6 bzw. 24 bedient werden können. Extrempositionen einer Drehachse des Manipulators 6 bzw. 24 sind entlang der Führung bzw. Führungsschiene wiederum mit 5 angedeutet.

Es ist unmittelbar einsichtig, daß entsprechend den Anforderungen eine weitere Vergrößerung der Führungsbahn bzw. -schiene 21 vorgenommen werden kann, so daß insgesamt mit einem kostengünstigen Manipulator 6 bzw. 24 vom Rotationstyp abweichend von bekannten Ausführungsformen, bei welchen sämtliche Beladestationen bzw. Entladestationen 1, 20, 30 als auch Palettenlager- bzw. -speicherplätze 4 aufgrund des vorgesehenen Drehantriebs entlang einer kreisbogenförmigen Bahn bzw. Kontur angeordnet sein mußten, auch Belade- bzw. Entladestationen 1, 2, 30 und/oder Palettenlager- bzw. -speicherplätze 4 von einem derartigen Manipulator vom Rotationstyp bedient werden können, welche wenigstens teilweise im wesentlichen nebeneinander angeordnet sind.

Es läßt sich somit ein kostengünstiger Manipulator 6 bzw. 24 vom Rotationstyp nicht nur in Kombination mit Maschinen, insbesondere Werkzeugmaschinen, einsetzen, bei welchen getrennt und nebeneinander liegend eine Beladestation 1 sowie eine Entladestation 20 vorgesehen sind, sondern auch im Zusammenhang mit einer Beladevorrichtung, bei welcher beispielsweise zur Erhöhung des Speichervolumens eine Mehrzahl von Palettenlager- bzw. -speicherplätzen 4 wenigstens teilweise im wesentlichen linear nebeneinander angeordnet ist, ohne einen einen größeren Kosten- und Konstruktionsaufwand erfordernden, linearen Manipulator zu erfordern.

Bei einer entsprechenden Hubhöhe der Gabel 9 des Manipulators 6 bzw. 24 können gegebenenfalls auch Palettenlager- bzw. -speicherplätze 4 bedient werden, welche nicht nur im wesentlichen nebeneinander und somit in einer Ebene bzw. Etage angeordnet sind, sondern zum Aufbau eines flächigen Speichers wenigstens teilweise übereinander, beispielsweise in zwei Ebenen bzw. Etagen, angeordnet sind.

## Patentansprüche

1. Manipulator für die Beladung wenigstens einer Maschine und/oder eines Speichers mit Paletten (3),
wobei der Manipulator (6) eine an einem Support (8) gelagerte Gabel (9) zum Aufnehmen und Transportieren jeweils einer Palette aufweist,
wobei die Gabel (9) in einer im wesentlichen vertikalen Ebene heb- und senkbar und in Richtung zu und weg von einem einer Mehrzahl von Palettenlagerplätzen (4) bewegbar ist, und der Support (8) der Gabel (9) darüber hinaus um eine im wesentlichen senkrechte Achse drehbar bzw. verschwenkbar ist,
**dadurch gekennzeichnet,**
**daß** der Support (8) der Gabel (9) zusätzlich entlang einer linearen Richtung (22), die parallel zu zwei nebeneinander liegenden Palettenaufnahmeplätzen (1, 20, 30) der Maschine und/oder wenigstens zwei nebeneinanderliegenden Palettenlagerplätzen (4) des Speichers verläuft, wenigstens in einem Ausmaß verschiebbar ist, daß durch die Gabel (9) des Manipulators (6) jeweils eine Palette (3) an den Palettenaufnahmeplätzen (1, 20, 30) der Maschine und/oder Palettenlagerplätzen (4) des Speichers aufnehmbar und/oder anordenbar ist,
**daß** die Gabel (9) über eine mit einem Gelenkvieleck (14, 15) gekoppelte Hebelverbindung (11, 12, 13) am Support (8) gelagert ist, und
**daß** die Hebelverbindung (11, 12, 13) jeweils zwei in Abstand voneinander an einer Basisplatte (10) des Supports (8) schwenkbar angelenkte Hebelarme (11, 12), welche an ihren von der Basisplatte abgewandten Enden jeweils an einem plattenartigen Element (13) angreifen, umfasst.

2. Manipulator nach Anspruch 1, **dadurch gekennzeichnet, daß** der Support (8) entlang einer linearen Führung (21) über einen Verschiebeantrieb bewegbar ist.

3. Manipulator nach Anspruch 1 oder 2, **dadurch gekennzeichnet, daß** der Support (8) entlang der linearen Richtung über eine Länge verschiebbar ist, die der Anordnung einer Mehrzahl von nebeneinander liegenden Maschinen (1, 20, 30) und/oder Palettenlagerplätzen (4) des Speichers entspricht.

4. Manipulator nach Anspruch 1, 2 oder 3, **dadurch gekennzeichnet, daß** das Gelenkvieleck (14, 15) als Gelenkparallelogramm ausgebildet ist, und daß die Gabel (9) über zwei voneinander getrennte Verstellantriebe (17, 18), welche an unterschiedlichen Stellen der Hebelverbindung (11, 12, 13) und/oder des Gelenkvielecks (14, 15) angreifen, in der im wesentlichen vertikalen Ebene heb- und senkbar und in Richtung zu und weg von einem Palettenlagerplatz (1, 2, 4) bewegbar ist.

5. Manipulator nach einem der Ansprüche 1 bis 4, **dadurch gekennzeichnet, daß** sämtliche Elemente (11, 12, 13, 14, 15, 16) des Gelenkvielecks sowie der Hebelverbindung jeweils symmetrisch zu dem die Rotationsachse (5) der Gabel (9) definierenden bzw. aufweisenden Support (8) angeordnet sind und zu beiden Seiten mit der Gabel (9) koppelbar sind.

6. Manipulator nach einem der Ansprüche 1 bis 5, **dadurch gekennzeichnet, daß** die jeweils zwei Hebelarme (11, 12) im wesentlichen vertikal verlaufen, daß darüber hinaus jeweils ein Ende der das Gelenkvieleck ausbildenden, im wesentlichen parallel zueinander verlaufenden Träger bzw. Balken (14, 15) an dem plattenförmigen Element (13) angelenkt ist, und daß die Gabel (9) an den jeweils von der Verbindung mit dem plattenförmigen Element (13) abgewandten Enden mit den im wesentlichen zueinander parallelen Trägern (14, 15) des Gelenkvielecks über einen weiteren Hebelarm (16) gekoppelt ist.

7. Manipulator nach Anspruch 6, **dadurch gekennzeichnet, daß** der mit der Gabel (9) gekoppelte Hebelarm (16) gebogen bzw. abgewinkelt ausgebildet ist.

8. Manipulator nach Anspruch 6 oder 7, **dadurch gekennzeichnet, daß** ein Anlenkpunkt eines im wesentlichen vertikalen Hebelarms (12) und ein Anlenkpunkt eines Trägers (14) des Gelenkvielecks zusammenfallen.

9. Manipulator nach einem der Ansprüche 6 bis 8, **dadurch gekennzeichnet, daß** ein Verstellantrieb (17) an den plattenförmigen Elementen (13) der Hebelverbindung gelagert ist und ein Verstellantrieb (18) an einem der im wesentlichen vertikal angeordneten Hebelarme (12) angreift.

10. Manipulator nach Anspruch 4 und einem der Ansprüche 1 bis 9, **dadurch gekennzeichnet, daß** die Verstellantriebe (17, 18) in im wesentlichen normal aufeinander wirkenden Richtungen im wesentlichen in der im wesentlichen vertikalen Ebene einer Verstellung der Gabel (9) angeordnet sind.

11. Manipulator nach Anspruch 4 und einem der Ansprüche 1 bis 10, **dadurch gekennzeichnet, daß** die Verstellantriebe (17, 18) von Spindelantrieben oder Servomotoren gebildet sind.

12. Manipulator nach einem der Ansprüche 1 bis 11, **dadurch gekennzeichnet, daß** die Maschine als Werkzeugmaschine ausgebildet ist, und daß die Paletten (3) jeweils eine Mehrzahl von Gegenstängen, insbesondere zu bearbeitenden Werkstücken, tragen.

13. Beladevorrichtung für wenigstens eine Maschine, insbesondere Werkzeugmaschine, umfassend eine Beladestation für jeweils eine Palette (3) mit einer Mehrzahl von zu bearbeitenden Werkstücken, wenigstens eine Ent- bzw. Beladestation (1, 20, 30) für die Maschine, insbesondere Werkzeugmaschine, und eine Mehrzahl von Palettenlager- bzw. -speicherplätzen (4) zur Anordnung bzw. Aufnahme von jeweils einer Palette (3), **dadurch gekennzeichnet, daß** sie einen Manipulator (6) nach einem der Ansprüche 1 bis 12 zum Aufnehmen und Transportieren jeweils einer Palette (3) zwischen den einzelnen Palettenlagerplätzen (4) und Beladestationen (1, 20, 30) umfaßt.

14. Beladevorrichtung nach Anspruch 13, **dadurch gekennzeichnet, daß** eine lineare Führung (21) vorgesehen ist, entlang welcher eine Mehrzahl von Ent- bzw. Beladestationen (1, 20, 30) einer Mehrzahl von Maschinen und/oder eine Mehrzahl von Palettenspeicherplätzen (4) des Speichers angeordnet ist bzw. sind.

## Claims

1. Manipulator for loading at least one machine and/or store with pallets (3),
wherein the manipulator (6) has a fork (9) arranged on a support (8) for receiving and transporting in each case one pallet,
wherein the fork (9) can be raised and lowered in a substantially vertical plane and can be moved in a direction towards and away from a plurality of pallet storage spaces (4), and furthermore the support (8) for the fork (9) can be rotated or pivoted about a substantially vertical axis, **characterized in**
**that** the support (8) for the fork (9) can additionally be displaced in a linear direction (22) which extends parallel to two adjacent pallet receiving spaces (1, 20, 30) of the machine and/or at least two adjacent pallet storage spaces (4) of the store, at least to such an extent that by way of the fork (9) of the manipulator (6) a pallet (3) can be respectively received and/or arranged at the pallet receiving spaces (1, 20, 30) of the machine and/or the pallet storage spaces (4) of the store,
**that** the fork (9) is arranged on the support (8) via a lever connection (11, 12, 13) coupled to a polygonal linkage (14, 15), and
**that** the lever connection (11, 12, 13) comprises respectively two lever arms (11, 12) which are articulated in a pivotable manner and spaced apart from one another on a base plate (10) of the support (8) and each act on a plate-like element (13) at their ends remote from the base plate.

2. Manipulator according to Claim 1, **characterized in that** the support (8) can be moved along a linear guide (21) by way of a displacing drive.

3. Manipulator according to Claim 1 or 2, **characterized in that** the support (8) can be displaced in the linear direction over a length which corresponds to the arrangement of a plurality of adjacent machines (1, 20, 30) and/or pallet storage spaces (4) of the store.

4. Manipulator according to Claim 1, 2 or 3, **characterized in that** the polygonal linkage (14, 15) is configured as a parallelogram linkage, and that the fork (9) can be raised and lowered in the substantially vertical plane and can be moved in a direction towards and away from a pallet storage space (1, 2, 4) via two separate adjusting drives (17, 18), which act on different points of the lever connection (11, 12, 13) and/or of the polygonal linkage (14, 15).

5. Manipulator according to one of Claims 1 to 4, **characterized in that** all of the elements (11, 12, 13, 14, 15, 18) of the polygonal linkage and of the lever connection are arranged respectively in a symmetrical manner with respect to the support (8) which defines or contains the rotational axis (5) of the fork (9), and said elements can be coupled on both sides to the fork (9).

6. Manipulator according to one of Claims 1 to 5, **characterized in that** the respectively two lever arms (11, 12) extend in a substantially vertical manner, that furthermore respectively one end of the carriers or beams (14, 15) that form the polygonal linkage and extend substantially parallel to one another is articulated on the plate-like element (13), and that the fork (9) is coupled, at the ends which are respectively remote from the connection to the plate-like element (13), to the substantially parallel carriers (14, 15) of the polygonal linkage via a further lever arm (16).

7. Manipulator according to Claim 6, **characterized in that** the lever arm (16) coupled to the fork (9) is formed in a curved or angled manner.

8. Manipulator according to Claim 6 or 7, **characterized in that** a point of articulation of a substantially vertical lever arm (12) coincides with a point of articulation of a carrier (14) of the polygonal linkage.

9. Manipulator according to one of Claims 6 to 8, **characterized in that** an adjusting drive (17) is arranged on the plate-like elements (13) of the lever connection and an adjusting drive (18) acts on one of the substantially vertically arranged lever arms (12).

10. Manipulator according to Claim 4 and one of Claims 1 to 9, **characterized in that** the adjusting drives (17, 18) are arranged in directions acting substantially normally on one another substantially in the substantially vertical plane of adjustment of the fork (9).

11. Manipulator according to Claim 4 and one of Claims 1 to 10, **characterized in that** the adjusting drives (17, 18) are formed by spindle drives or servomotors.

12. Manipulator according to one of Claims 1 to 11, **characterized in that** the machine is configured as a machine tool, and that the pallets (3) each carry a plurality of objects, In particular workpieces to be machined.

13. Loading device for at least one machine, in particular a machine tool, comprising a loading station for in each case one pallet (3) having a plurality of workpleces to be machined, also comprising at least one unloading and loading station (1, 20, 30) for the machine, in particular machine tool, and a plurality of pallet storage spaces (4) for arranging or receiving in each case one pallet (3), **characterized in that** it comprises a manipulator (6) according to one of Claims 1 to 12 for receiving and transporting in each case one pallet (3) between the individual pallet storage spaces (4) and loading stations (1, 20, 30).

14. Loading device according to Claim 13, **characterized in that** there is provided a linear guide (21), along which a plurality of unloading and loading stations (1, 20, 30) of a plurality of machines and/or a plurality of pallet storage spaces (4) of the store are arranged.

## Revendications

1. Manipulateur pour le chargement d'au moins une machine et/ou d'une réserve avec des palettes (3),
le manipulateur (6) présentant une fourche (9) logée sur un support (8) pour la réception et le transport de respectivement une palette,
la fourche (9) pouvant être soulevée et abaissée dans un plan sensiblement vertical et pouvant être déplacée en direction d'une pluralité d'emplacements de stockage de palette (4) et à partir de ces emplacements, et le support (8) de la fourche (9) pouvant être tourné et basculé d'autre part autour d'un axe sensiblement vertical,
**caractérisé en ce**
**que** le support (8) de la fourche (9) peut être déplacé en supplément le long d'une direction (22) linéaire, qui est agencée parallèlement à deux emplacements de réception de palette (1, 20, 30) juxtaposés de la machine et/ou à au moins deux emplacements de stockage de palette (4) juxtaposés de la réserve, au moins dans une proportion telle qu'à chaque fois une palette (3) peut être réceptionnée et/ou mise en place par la fourche (9) du manipulateur (6) sur les emplacements de logement de palette (1, 20, 30) de la machine et/ou les emplacements de stockage de palette (4) de la réserve,
**que** la fourche (9) est logée sur le support (8) au moyen d'une liaison à levier (11, 12, 13) couplée avec un polygone articulé (14, 15), et
**que** la liaison à levier (11, 12, 13) comprend respectivement deux bras de levier (11, 12) articulés de façon pivotante à distance l'un de l'autre sur une plaque de base (10) du support (8), lesquels bras s'appliquent respectivement par leurs extrémités opposées à la plaque de base sur un élément (13) en forme de plaque.

2. Manipulateur selon la revendication 1, **caractérisé en ce que** le support (8) peut être déplacé le long d'un guide (21) linéaire au moyen d'un entraînement de coulissement.

3. Manipulateur selon la revendication 1 ou 2, **caractérisé en ce que** le support (8) peut être déplacé le long de la direction linéaire sur une longueur qui correspond à l'agencement d'une pluralité de machines (1, 20, 30) juxtaposées et/ou emplacements de stockage de palette (4) juxtaposés de la réserve.

4. Manipulateur selon la revendication 1, 2 ou 3, **caractérisé en ce que** le polygone articulé (14. 15) est conçu comme un parallélogramme articulé, et que la fourche (9) peut être soulevée et abaissée dans le plan sensiblement vertical au moyen de deux entraînements de réglage (17, 18) séparés l'un de l'autre, qui s'appliquent en différents endroits de la liaison à levier (11, 12, 13) et/ou du polygone articulé (14, 15), et peut être déplacée en direction d'un emplacement de stockage de palette (1, 2, 4) et à partir de cet emplacement.

5. Manipulateur selon l'une des revendications 1 à 4, **caractérisé en ce que** tous les éléments (11, 12, 13, 14, 15, 16) du polygone articulé et de la liaison à levier sont disposés respectivement de façon symétrique par rapport au support (8) définissant ou présentant l'axe de rotation (5) de la fourche (9) et peuvent être couplés des deux côtés avec la fourche (9).

6. Manipulateur selon l'une des revendications 1 à 5, **caractérisé en ce que** les deux bras de levier respectifs (11, 12) sont agencés sensiblement verticalement, que d'autre part une extrémité respectivement des supports ou poutres (14, 15) formant le polygone articulé et agencés sensiblement parallèlement entre eux est articulée sur l'élément (13) en forme de plaque, et que la fourche (9) est couplée au moyen d'un autre bras de levier (16) sur les extrémités, respectivement opposées à la liaison avec l'élément (13) en forme de plaque, avec les supports (14, 15) sensiblement parallèles entre eux, du polygone articulé.

7. Manipulateur selon la revendication 6, **caractérisé en ce que** le bras de levier (16) couplé avec la fourche (9) est conçu plié ou coudé.

8. Manipulateur selon la revendication 6 ou 7, **caractérisé en ce qu'**un point d'articulation d'un bras de levier (12) sensiblement vertical et un point d'articulation d'un support (14) du polygone articulé coïncident,

9. Manipulateur selon l'une des revendications 6 à 8, **caractérisé en ce qu'**un entraînement de réglage (17) est logé sur les éléments (13) en forme de plaque de la liaison à levier et un entraînement de réglage (18) s'applique sur l'un des bras de levier (12) disposés sensiblement verticalement.

10. Manipulateur selon la revendication 4 et l'une des revendications 1 à 9, **caractérisé en ce que** les entraînements de réglage (17, 18) sont disposés dans des directions agissant sensiblement perpendiculairement entre elles, essentiellement dans le plan sensiblement vertical d'un réglage de la fourche (9).

11. Manipulateur selon la revendication 4 et l'une des revendications 1 à 10, **caractérisé en ce que** les entraînements de réglage (17, 18) sont formés par des entraînements à broche ou des servomoteurs.

12. Manipulateur selon l'une des revendications 1 à 11, **caractérisé en ce que** la machine est conçue sous forme de machine-outil, et **en ce que** les palettes (3) portent à chaque fois une pluralité d'objets, en particulier de pièces à usiner.

13. Dispositif de chargement pour au moins une machine, en particulier une machine-outil, comprenant une station de chargement pour respectivement une palette (3) avec une pluralité de pièces à usiner, au moins une station de déchargement et/ou de chargement (1, 20, 30) pour la machine, en particulier la machine-outil, et une pluralité d'emplacements de stockage de palettes et de réserve de palettes (4) pour la mise en place ou la réception de respectivement une palette (3), **caractérisé en ce qu'**il comprend un manipulateur (6) selon l'une quelconque des revendications 1 à 12 pour la réception et le transport de respectivement une palette (3) entre les emplacements de stockage de palettes (4) individuels et les stations de chargement (1, 20, 30) individuelles.

14. Dispositif de chargement selon la revendication 13, **caractérisé en ce qu'**un guide (21) linéaire est prévu, le long duquel sont disposées une pluralité de stations de déchargement et/ou de chargement (1, 20, 30) d'une pluralité de machines et/ou une pluralité d'emplacements de réserve de palettes (4) de la réserve.
